# EUROPEAN PATENT SPECIFICATION

(11) **EP 0 669 193 B1**
(45) Date of publication and mention of the grant of the patent: **26.05.1999**
(21) Application number: 95850011.8
(22) Date of filing: 12.01.1995
(51) Int. Cl.: B29B 7/44

(54) **A glue mixing device**
Vorrichtung zum Mischen von Leim
Dispositif pour mélanger de la colle

(30) Priority: 28.01.1994 SE 9400278
(43) Date of publication of application: 30.08.1995
(73) Proprietor: Casco Products AB, 100 61 Stockholm (SE)
(72) Inventor: Vesterlund, Lennart, S 129 36 Hägersten (SE)
(74) Representative: Jönsson, Christer

(56) References cited:
- EP-A- 0 108 167
- EP-A- 0 333 111
- CH-A- 472 285
- DE-A- 2 809 228
- DE-C- 902 789
- FR-A- 2 085 834
- GB-A- 838 030
- GB-A- 872 851
- US-A- 3 035 775

## Description

The present invention relates to a horizontal glue mixer for continuous mixing and throughflow of multicomponent glue and a method of continuously mixing and feeding out multicomponent glue.

A glue-mixer and a method of mixing multicomponent glue is known from e.g. DE-A-2 809 228. In particular this document DE-A-2 809 228 discloses a horizontal glue mixer for continuous mixing and throughflow of a multicomponent glue comprising a mixing tube having a supply pipe for a glue component and a supply pipe for a curing agent component, a central movable axis extending in the direction of length of the mixing tube, having a smaller diameter than that of the mixing tube, along which axis mixing member, which are part of a helical screw feeder, are mounted and are runing closely to the inner wall of the mixing tube, the mixing tube being closed at one end facing away from the direction of flow of the mixture and open at the opposite feed out end. DE-A-2 809 228 further discloses a method of continuously mixing and feeding out multicomponent glue whereby the glue and the curing agent components are fed into a mixing tube open at one end, in the vicinity of the other closed end of the tube through separate supply tubes, in which mixing tube the components are mixed with one another by means of mixing members arranged in the flow direction, attached to a rotating central axis which members homogeneously mix the components with one another and force the mixture forward.

The mixing of multicomponent-thermosetting resin glue e.g. resorcinol phenol glue, phenol glue, urea-formaldehyde resin glue, polyurethane glue, with the aid of a so-called static mixer, i.e. a mixing tube without moving parts where the components are pumped to the mixing unit by means of low pressure pumps or high pressure pumps is previously known. Recently melamine-urea-formaldehyde glue (MUF-glue) has come into use more often for gluing wood, because of its short pot life however, problems have arisen when mixing said glue by means of static mixers.

For lamella gluing, in the production of laminated wood, a flow of 5-15 kg per minute is required. When using static mixers this gives rise to a high counter pressure of >10 bar, therefore they often break down, causing a stop in production. To avoid these problems when using static mixers one has, therefore, gone over to the use of high pressure pumps, e.g. piston pumps. When using static mixers and high pressure pumps, the high counter pressure causes difficulties with the dosage with regard to the correct ratio to one another of the glue and curing components respectively.

Another problem which must be taken into account when mixing multicomponent-thermosetting resin glue is the pot life, which, for example, is about 45 minutes for MUF-glue. This also gives rise to difficulties in cleaning the static mixer, which is without moving parts and in which the glue mixture easily fastens when the mixture starts to set.

In finger jointing, which is another common method of gluing wood parts to each other, a slower flow is required than in lamella gluing, viz. a flow of about 0.5 to 2 kg/minute.

The object of the present invention was to provide a glue-mixing device and a method of mixing a multicomponent glue with a continuous flow of the glue mixture, providing high dosage-accuracy of glue and curing agent having a small volume of ready mixed glue in the actual mixing system.

The above object is achieved according to the invention by a glue-mixer for continuous mixing and throughflow of multicomponent glue as defined in claim 1 and by a method of continuously mixing and feeding out multicomponent glue as defined in claim 6. Particular embodiments of the invention are disclosed in the dependent claims.

The flow of the glue mixture, which may be between about 0.5 and about 15 kg/minute, being provided only with the aid of low pressure pumps, e.g. gear driven type pumps or eccentric screw-pumps. The mixture of glue and hardening components is obtained with the aid of a moveable mixing part in a mixing tube, comprising an axis on which mixing members are mounted, e.g. in the form of wings which are straight in the direction of the flow. The axis and appertaining wings may rotate with a rotation speed of about 1000-2000 revolutions/minute, driven by a motor. The wings should run close up to the inside wall of the mixing tube, suitably at a distance of 0.1-1 mm from said wall. It is preferable that the wings are straight in the direction of the flow, which allows the wings not to essentially force the glue mixture forward in the flow direction either when the pumps are turned on or when they are in off position. Because the wings rotate closely against the inner wall of the mixing tube a homogeneous mixture of glue and curing agent is obtained.

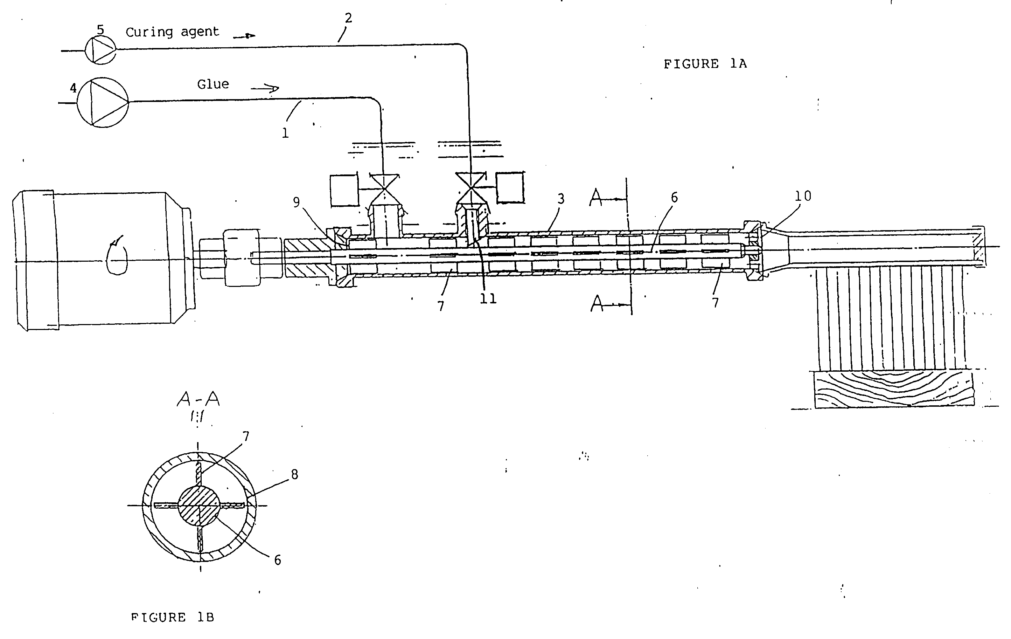

In the accompanying drawings
Fig. 1A illustrates a sectional view of a glue mixer according to the invention, coupled with an extruder, and
Fig. 1B illustrates a cross sectional view along the lines A-A of Fig. 1A, which discloses a suitable embodiment of the rotating mixing members.

With the glue mixer and with the use of low pressure pumps of 1-6 bar counter pressure, a flow of 2-15 kg/minute is achieved without difficulty while only a small volume of glue mixture is in the mixing tube.

Suitable dimensions of the tube for said flow are, e.g. a length of 400 mm and an inner diameter of 38 mm. Other suitable dimensions are a length of 200 mm and an inner diameter of 28 mm. If the length of the mixing tube is 400 mm, a suitable number of mixing members is eight, whereby each mixing member contains two pairs of straight pairs of wings in the direction of the flow, cf. Fig. 1B. The distance between the pairs of wings from the inlet area for the curing agent in the direction of the flow in the mixing tube is suitably 5-15 mm and a suitable breadth for each blade is 25 mm. One set of pairs of wings is suitably positioned in the mixing tube before the glue inlet in the direction of the flow and a set of pairs of wings before the inlet place for the curing agent in the direction of the flow, cf. Fig. 1A. Furthermore it is important that the wings sweep closely to the inner wall of the mixing tube and that they are straight in the direction of the flow, i.e. they do not force the glue mixture forward. The wings rotate with the axis which is driven by a motor at a rotation speed of between 1000 and 2000 revolutions/minute. A suitable rotation speed is about 1400 revolutions/minute.

A suitable embodiment of the inlet for the curing agent comprises the curing agent being supplied to the mixing device via a feeder member 11, which is inclined in the flow direction and which feeds the curing agent as near as possible to the axis and which is inclined in such a way so that the distance of the lower edge of the feeder member from the axis increases in the flow direction. This method enables the glue to drag the curing agent in the direction of the flow and this prevents the curing agent from migrating against the direction of flow.

Owing to the design of the glue mixer effective mixing with low counter pressure and high capacity is obtained. Furthermore, the glue mixer is easily cleaned, where a normal cleaning process may take only as short a time as 1 minute, using only 5 liters of water, which is a great improvement as compared to the use of static mixers, which are difficult to clean.

With the glue mixer glue of a viscosity of between 2000 and 20,000 mPa.sec is mixed with a flow of 3-15 kg minute.

The glue mixer is highly suitable for mixing melamine-urea-formaldehyde glue (MUF-glue) having a short pot life. Due to the glue mixer accomodating only a small volume of glue mixture there are no problems with premature curing of the glue mixture in the mixer, and the prepared glue mixture flows evenly and with a high degree of dosage-accuracy out of the open end of the mixer tube.

The glue mixer is also suitable for mixing other types of multicomponent-thermosetting resin glue such as resorcinol-phenol-glue, phenol glue, urea-formaldehyde resin glue, polyurethane glue and so-called EPI-glue (emulsion polymer-isocyanate glue).

Fig. 1 of the drawing illustrates a glue mixer according to the invention in which glue 1, curing agent 2, respectively, separately are carried to a mixing tube 3 via separate pipes and with the aid of separate low pressure pumps 4 and 5. A moveable axis 6 runs through the mixing tube 3, which is driven by means of a driving motor and on which axis 6 pairs of wings 7 which are straight in the flow direction are mounted which run closely to the wall 8 of the mixing tube 3 and by means of which the glue 1 and curing 2 agent components are thoroughly mixed. A suitable embodiment of the wings 7 is as pairs of wings attached around the circumference of the axis 6 in the form of two pairs, such as is illustrated in Fig. 1B. Another possible suitable embodiment of the wings is, for example, three wings evenly distributed around the circumference of the axis or three pairs of wings evenly distributed around the same circumference. The wings 7 are suitably plane and compact in the direction of rotation but it is also possible to make them hollow in the direction of rotation. The mixing tube 3 is closed at one end 9 away from the direction of the flow and open at the output end 10, and may, for example, contain a row of small openings through which the glue mixture flows e.g. to an extruder attached to the mixing tube 3.

In the method according to the invention the glue 1 and curing agent 2 are supplied by means of low-pressure pumps 4 and 5 to a mixing tube 3 in which, by means of the pressure from the low-pressure pumps 4 and 5, they are carried forward in the direction of a feed out end 10 of the mixing tube 3 provided with an aperture or a number of apertures. At the same time the glue component 1 and the curing component 2 are mixed with one another by means of the mixing members 7, preferably wings mounted round a moveable axis 6 driven by a motor, which wings move closely to the inner wall 8 of the mixing tube 3 and are arranged at spaces along the flow direction of the glue mixture in the mixing tube 3. When exiting from the mixing tube 3 the glue and the curing agent are homogeneously mixed with one another and are supplied thereafter to a suitable glue applicator, e.g. an extruder, curtain spreader or roller spreader. When the low-pressure pumps 4 and 5 are turned off the flow of the glue mixture out from the mixing tube 3 stops immediately due to capillary effects of the small apertures in the feed out end 10 of the mixing tube 3. By means of said mixing method an even and accurate dosage of the glue 1 and curing agent 2 component, respectively, is obtained, so that an even mixture ratio of these is obtained when the glue mixture flows out from the mixing tube 3.

## Claims

1. A horizontal glue mixer for continuous mixing and throughflow of a multicomponent glue, comprising a mixing tube (3) having two or more supply pipes (1,2) for glue component(s) and curing agent component(s), low-pressure pumps (4,5) arranged at the supply pipes (1,2), a central, movable axis (6) extending in the direction of length of said tube (3), having a considerably smaller diameter than that of the mixing tube (3), along which axis mixing members (7) are mounted in the form of wings which are straight in the direction of the flow and are running closely to the inner wall (8) of the mixing tube (3), the mixing tube (3) being closed at one end (9) facing away from the direction of flow of the mixture and open at the opposite end, the feed out end (10).

2. A glue mixer according to claim 1, whereby at the inlet part for the curing agent into the mixing tube (3) is formed as a feed part (11) inclined in the direction of the flow through which the curing agent (2) is fed as near as possible to the axis (6) and which feed part is inclined in such a way that the distance of the lower edge of said part from the axis (6) increases in the direction of the flow.

3. A glue mixer according to claim 1 or 2, whereby each mixing member (7) is in the form of two pairs of wings mounted and evenly distributed around the axis (6).

4. A glue mixer according to any of the previous claims, whereby the mixing members (7) in the form of a set of pairs of wings are positioned in the mixing tube (3) before the place for the glue supply in the direction of flow, and a set of pairs of wings are positioned before the inlet place for the curing agent supply in the direction of the flow.

5. A glue mixer according to any of the previous claims, whereby the mixer tube (3) at the feed out end (10) is provided with one or several small apertures for feeding out the glue.

6. A method of continuously mixing and feeding out multicomponent glue, whereby the glue and curing agent components (1,2) are fed into a mixing tube (3) open at one end (10), in the vicinity of the other closed end (9) of the tube (3), through separate supply tubes by means of low pressure pumps (4,5), in which mixing tube (3) the components are mixed with one another by means of mixing members (7) arranged in the flow direction, attached to a rotating central axis (6) which members homogeneously mix the components with one another but without essentially forcing these forward in the flow direction, the glue mixture being forced forward to the outlet direction only by means of the low pressure from the low pressure pumps (4,5) by means of which the glue and curing agent components are supplied to the mixing tube (3).

7. A method according to claim 6, whereby the glue mixture is fed out at a flow speed of 5-15 kg per minute for use, for example, in lamella gluing when producing laminated wood.

8. A method according to claim 6, whereby the glue is a melamine-urea-formaldehyde-glue (MUF-glue).

9. A method according to any of the previous claims, whereby the glue is selected from resorcinol-phenol glue, phenol glue, urea-formaldehyde-resin glue, polyurethane glue and emulsion polymer isocyanate glue (EPI-glue).

## Patentansprüche

1. Horizontaler Leimmischer zum kontinuierlichen Mischen und Durchfluß eines Mehrkomponentenleims, der aufweist: eine Mischröhre (3) mit zwei oder mehr Anschlußrohren (1, 2) für Leimbestandteil(e) und Härtungsmittelbestandteil(e), in den Anschlußrohren (1, 2) angeordnete Niederdruckpumpen (4, 5), eine mittlere bewegliche Achse (6) mit einem beträchtlich kleineren Durchmesser als dem der Mischröhre (3), die sich in der Richtung der Länge der Röhre (3) erstreckt, wobei entlang der Achse Mischglieder (7) in der Form von flügeln montiert sind, welche in der Richtung des Flusses gerade sind und dicht zur Innenwand (8) der Mischröhre (3) laufen, wobei die Mischröhre (3) an einem Ende (9) von der Flußrichtung der Mischung weg geschlossen und am entgegengesetzten Ende, dem Abführende (10), offen ist.

2. Leimmischer nach Anspruch 1, wobei der Einlaßteil für das Härtungsmittel in die Mischröhre (3) als ein Zuführungsteil (11) ausgeformt ist, das in Flußrichtung schräg ist und durch welches das Härtungsmittel (2) so nahe wie möglich an die Achse (6) zugeführt wird, wobei das Zuführungsteil auf eine derartige Weise schräg ist, daß der Abstand des unteren Rands des genannten Teils von der Achse (6) in der Flußrichtung zunimmt.

3. Leimmischer nach Anspruch 1 oder 2, wobei jedes Mischglied (7) in der Form von zwei gleichmäßig um die Achse (6) verteilten und montierten Flügelpaaren ist.

4. Leimmischer nach einem der vorangehenden Ansprüche, wobei die Mischglieder (7) in der Form eines Satzes von Flügelpaaren in der Mischröhre (3) in der Flußrichtung vor der Stelle für die Leimzuführung positioniert sind und ein Satz von Flügelpaaren in dar Flußrichtung vor der Einlaßstelle für die Härtungsmittelzuführung positioniert ist.

5. Leimmischer nach einem der vorangehenden Ansprüche, wobei die Mischröhre (3) an dem Abführende (10) mit einer oder einigen kleinen Öffnungen zum Abführen des Leims versehen ist.

6. Verfahren zum kontinuierlichen Mischen und Abführen von Mehrkomponentenleim, wobei die Leim- und Härtungsmittelbestandteile (1, 2) mit Hilfe von Niederdruckpumpen (4, 5) durch getrennte Anschlußrohre in eine an einem Ende (10) offene Mischröhre (3) in der Nähe des anderen geschlossenen Endes (9) der Röhre (3) zugeführt werden, wobei die Bestandteile in der Mischröhre (3) mit Hilfe von in der Flußrichtung angeordneten an einer sich drehenden Mittelachse (6) befestigten Mischgliedern (7) miteinander vormischt werden, wobei die Glieder die Bestandteile homogen miteinander vermischen, diese jedoch im wesentlichen nicht in der Flußrichtung vorwärts treiben, wobei die Leimmischung mit Hilfe des niedrigen Drucks von den Niederdruckpumpen (4, 5), mittels derer die Leim- und Härtungsmittelbestandteile an die Mischröhre (3) geliefert werden, vorwärts in die Auslaßrichtung getrieben wird.

7. Verfahren nach Anspruch 6, wobei die Leimmischung mit einer Fließgeschwindigkeit von 5 bis 15 kg pro Minute zum Beispiel zur Verwendung beim Schichtleimen, wenn Schichtholz hergestellt wird, abgeführt wird.

8. Verfahren nach Anspruch 6, wobei der Leim ein Melamin-Harnstoff-Formaldehyd-Kunstharzleim (MUF-Leim) ist.

9. Verfahren nach einem der vorangehenden Ansprüche, wobei der Leim aus Resorcinol-Phenolleim, Phenolleim, Harnstoff-Formaldehyd-Kunstharzleim, Polyurethanleim und einer Emulsion aus Polymer-Isozyanatleim (EPI-Leim) ausgewählt wird.

## Revendications

1. Mélangeur à colle horizontal pour le mélange et la coulée continue d'une colle multicomposants, comprenant un tube mélangeur (3) comportant au moins deux tuyaux d'alimentation (1, 2) pour composant(s) formant colle et pour composant(s) formant agent durcisseur, des pompes basse-pression (4, 5) montées sur les tuyaux d'alimentation (1, 2), un axe (6) central mobile s'étendant dans la direction de la longueur dudit tube (3), et ayant un diamètre considérablement plus peut que celui du tube mélangeur (3), le long duquel axe sont montés des éléments mélangeurs (7) sous forme d'ailettes qui vont droit dans la direction de l'écoulement et évoluent très près de la paroi interne (8) du tube mélangeur (3), le tube mélangeur (3) étant fermé à une extrémité (9) opposée au sens d'écoulement du mélange et ouvert à l'extrémité opposée, ou extrémité de sortie (10).

2. Mélangeur à colle selon la revendication 1, dans lequel la partie d'admission dans le tube mélangeur (3) pour l'agent durcisseur est formée comme une pièce d'alimentation (11) inclinée dans le sens de l'écoulement dans lequel l'agent durcisseur (2) est déversé aussi près que possible de l'axe (6) et laquelle pièce d'alimentation est inclinée de telle manière que la distance du bord inférieur de ladite pièce à l'axe (6) augmente dans le sens de l'écoulement.

3. Mélangeur à colle selon la revendication 1 ou 2, dans lequel chaque élément mélangeur (7) est sous la forme de deux paires d'ailettes montées et distribuées régulièrement autour de l'axe (6).

4. Mélangeur à colle selon l'une quelconque des revendications précédentes, dans lequel les éléments mélangeurs (7), sous la forme d'un ensemble de paires d'ailettes, sont positionnés dans le tube mélangeur (3) avant la position d'arrivée de la colle dans le sens de l'écoulement, et un ensemble de paires d'ailettes est positionné avant la position d'admission pour l'alimentation en agent durcisseur dans le sens de l'écoulement.

5. Mélangeur à colle selon l'une quelconque des revendications précédentes, dans lequel le tube mélangeur (3) est pourvu, à son extrémité de sortie (10), d'une ou de plusieurs petites ouvertures pour faire sortir la colle.

6. Procédé pour le mélange et la coulée en continu de colle multicomposants, dans lequel les composants (1, 2) formant colle et agent durcisseur sont injectés dans un tube mélangeur (3) dans le voisinage de l'extrémité fermée (9) du tube (3), qui est ouvert à l'autre extrémité (10), par des tubes d'alimentation distincts grâce à des pompes basse pression (4, 5), les composants étant mélangés l'un à l'autre dans le tube mélangeur (3) au moyen d'éléments mélangeurs (7) disposés dans le sens de l'écoulement, fixés à un axe central rotatif (6) dont les éléments mélangent les composants de manière homogène mais sans les faire aller essentiellement dans le sens de l'écoulement, le mélange de colle étant conduit vers la sortie seulement grâce à la basse pression générée par les pompes basse pression (4, 5) au moyen desquelles les composants formant colle et agent durcisseur sont amenés au tube mélangeur (3).

7. Procédé selon la revendication 6, dans lequel le mélange de colle est éjecté à un débit de 5-15 kg par minute pour une utilisation, par exemple, lors du collage de lamelles dans la production de bois contreplaqué.

8. Procédé selon la revendication 6, dans lequel la colle est une colle mélamine-urée-formaldéhyde (colle MUF).

9. Procédé selon l'une quelconque des revendications précédentes, dans lequel la colle est sélectionnée parmi des colles résorcinol-phénol, des colles phénoliques, des colles résines urée-formaldéhyde, des colles polyuréthanes et des colles polyisocyanates en émulsion (colles EPI).
